(19) Europäisches Patentamt
European Patent Office
Office européen des brevets

(11) **EP 2 584 780 B1**

(12) **EUROPEAN PATENT SPECIFICATION**

(45) Date of publication and mention
of the grant of the patent:
**17.04.2019 Bulletin 2019/16**

(21) Application number: **12186238.7**

(22) Date of filing: **27.09.2012**

(51) Int Cl.:
*H04N 19/117* (2014.01)    *H04N 19/423* (2014.01)
*H04N 19/124* (2014.01)    *H04N 19/136* (2014.01)
*H04N 19/182* (2014.01)    *H04N 19/80* (2014.01)
*H04N 19/82* (2014.01)    *H04N 19/85* (2014.01)

(54) **Method and device for encoding a video frame, method and device for decoding a video frame and storage medium**

Verfahren und Vorrichtung zur Codierung eines Videobildes, Verfahren und Vorrichtung zur Decodierung eines Videobildes und Speichermedium

Procédé et dispositif pour le codage d'une trame vidéo, procédé et dispositif pour le décodage d'une trame vidéo et support de stockage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2011 EP 11306356**

(43) Date of publication of application:
**24.04.2013 Bulletin 2013/17**

(73) Proprietor: **InterDigital Madison Patent Holdings 75017 Paris (FR)**

(72) Inventors:
• **Bordes, Philippe**
**35576 CESSON SEVIGNE (FR)**
• **Andrivon, Pierre**
**35576 CESSON SEVIGNE (FR)**
• **Salmon, Philippe**
**35576 CESSON SEVIGNE (FR)**

(74) Representative: **Lorette, Anne et al
InterDigital CE Patent Holdings
20, rue Rouget de Lisle
92130 Issy-les-Moulineaux (FR)**

(56) References cited:
**EP-A1- 2 169 657    US-A1- 2009 097 561**

• HOANG (ZENVERGE) D: "Unified scaling with adaptive offset for reference frame compression with IBDI", 95. MPEG MEETING; 24-1-2011 - 28-1-2011; DAEGU; (MOTION PICTURE EXPERT GROUP OR ISO/IEC JTC1/SC29/WG11),, no. m18782, 21 January 2011 (2011-01-21), XP030047352,
• CHUJOH (TOSHIBA) T ET AL: "Video coding technology proposal by Toshiba", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. XP030007558, 18 April 2010 (2010-04-18), XP030007559, ISSN: 0000-0049
• LIU S ET AL: "Bit-depth scalable coding for high dynamic range video", PROCEEDINGS OF SPIE, SPIE, US, vol. 6822, no. 2, 29 January 2008 (2008-01-29), pages 68220O-1, XP002517655, ISSN: 0277-786X, DOI: 10.1117/12.766601
• CHEUK-HONG CHENG ET AL: "Bit-depth expansion by contour region reconstruction", CIRCUITS AND SYSTEMS, 2009. ISCAS 2009. IEEE INTERNATIONAL SYMPOSIUM ON, IEEE, PISCATAWAY, NJ, USA, 24 May 2009 (2009-05-24), pages 944-947, XP031479355, ISBN: 978-1-4244-3827-3
• CHUN HUNG LIU ET AL: "Bit-depth expansion by adaptive filter", CIRCUITS AND SYSTEMS, 2008. ISCAS 2008. IEEE INTERNATIONAL SYMPOSIUM ON, IEEE, PISCATAWAY, NJ, USA, 18 May 2008 (2008-05-18), pages 496-499, XP031392018, ISBN: 978-1-4244-1683-7

**Description**

TECHNICAL FIELD

The invention is made in the field of video frame encoding. More precisely, the invention is concerned with encoding and decoding of video frames using Internal Bit Depth Increase (IBDI).

BACKGROUND OF THE INVENTION

Internal Bit Depth Increase (IBDI) allows extending transforms precision and reference frames buffer precision and can be used for improving codecs' performances significantly.

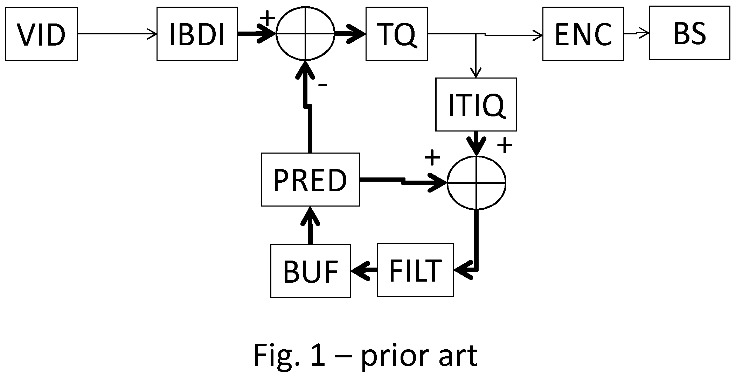

As exemplarily depicted in Fig. 1, the principle of IBDI is to increase the original bit depth of the original frame samples VID of an InputBitDepth by bitIncrement to an increased bit depth. In the Figure, bold arrows depict flow of data of increased bit depth while normal arrows depict flow of data of original bit depth. IBDI is done prior to transforming and quantizing TQ a residual with respect to a prediction PRED for encoding ENC into a bit stream BS. For prediction, reconstructed reference frames of increased bit depth are used, the reconstructed reference frames resulting from inverse quantization and inverse transformation ITIQ and are subjected to a de-blocking and in-loop filtering FILT before being buffered BUF.

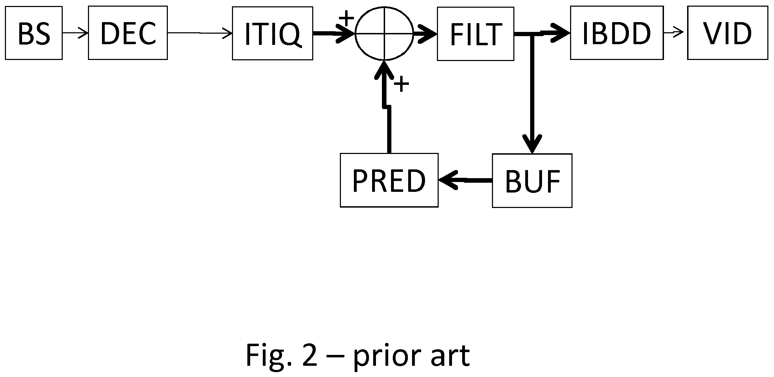

At decoder side, as exemplarily depicted in Fig. 2, an internal bit depth decrease IBDD is applied, after a bit stream BS is received, decoded DEC, inverse quantized and inverse transformed ITIQ, combined with a prediction PRED coming from a buffer BUF and filtered with the de-blocking and in-loop filtering FILT. After bit depth decrease IBDD the video is output. The decoded residuals and the reference frames used for prediction are of said increased bit depth and first a reconstructed frame of said increased bit depth is reconstructed which is then bit depth reduced to regain the frame.

The increase of bit depth can be achieved by left shifting (i.e. adding bitIncrement zeroes on the right of the sample value), for instance.

According to another approach, HOANG discloses in "Unified scaling with adaptive offset for reference frame compression with 1801"(95. MPEG MEETING; 21 January 2011) an offsetting method based on the average value of the block.

SUMMARY OF THE INVENTION

The inventors recognized that bit depth increase by, e.g., left shifting actually spreads the non-zero differences between consecutive spatial samples, e.g. a bit shift by one bit doubles a non-zero difference between consecutive samples, which begets fronts and leads to emphasized high frequencies in the transform domain. Thus, coding efficiency may be reduced.

Therefore, it is proposed methods according to claim 1 and to claim 7 and devices according to claim 10 and to claim 12 for modifying a video frame for encoding or decoding wherein values of pixels of the video frame are represented an increased bit depth. The proposed method comprises using processing means for executing the step of offsetting the pixel values of increased bit depth with offsets, the offsets depending on a spatial neighbourhood of the pixel to-be-offset, the spatial neighbourhood comprising pixels directly adjacent to the pixel to-be-offset; the offset depending on the number of those of the neighboring pixels which have pixel values larger than the value of the pixel to-be-offset. The device comprising said processing means for executing the step of offsetting the pixel values.

Such local adaptive offsetting of pixel values de-emphasizes high frequencies in the transform domain of bit depth increased signals.

In a further embodiment the offsets are no larger than a maximum offset, the maximum offset depending on a number of bits by which bit depth is increased.

It is further proposed a method, as well as a corresponding device, for encoding a video frame wherein values of pixels of the video frame are represented an increased bit depth. Said encoding method comprises modifying the video frame according the proposed method for video frame modification or one of the embodiments thereof.

In an embodiment, the reference video frame used for residual encoding is also modified according the proposed method for video frame modification or one of the embodiments thereof.

It is further proposed a method, as well as a corresponding device, for decoding a video frame wherein values of pixels of the video frame are represented with an increased bit depth, said method comprising modifying a reference video frame according the proposed method for video frame modification or one of the embodiments thereof and reconstructing the video frame using a decoded residual and the modified reference video frame. A non-transitory storage medium is also proposed, the non-transitory storage medium carrying an encoded video frame, the video frame being encoded according to the proposed method for video frame encoding or the embodiment of this method.

The features of further advantageous embodiments are specified in the dependent claims.

BRIEF DESCRIPTION OF THE DRAWINGS

Exemplary embodiments of the invention are illustrated in the drawings and are explained in more detail in the following description. The exemplary embodiments are explained only for elucidating the invention. The invention is defined in the appended claims.

In the figures:

Fig. 1     depicts an exemplary prior art encoder architecture;
Fig. 2     depicts an exemplary prior art decoder architecture;
Fig. 3     depicts a first exemplary application of the proposed adaptive offsetting in an encoder,
Fig. 4     depicts a second exemplary application of the proposed adaptive offsetting in an encoder,
Fig. 5     depicts a third exemplary application of the proposed adaptive offsetting in an encoder,
Fig. 6     depicts a fourth exemplary application of the proposed adaptive offsetting in an encoder,
Fig. 7     depicts a fithfth exemplary application of the proposed adaptive offsetting in an encoder,
Fig. 8     depicts a first exemplary application of the proposed adaptive offsetting in a decoder,
Fig. 9     depicts a second exemplary application of the proposed adaptive offsetting in a decoder,
Fig. 10     exemplarily illustrates the effect of non-zero difference spreading due to bit depth increase and reduction of the effect of said non-zero difference spreading due to the proposed adaptive offsetting;
Fig. 11     depict exemplary neighbourhoods of a current pixel.

EXEMPLARY EMBODIMENTS OF THE INVENTION

The invention may be realized on any electronic device comprising a processing means correspondingly adapted. For instance, the invention may be realized in a television, a mobile videophone, a personal computer, a digital video camera, a navigation system or a car video system.

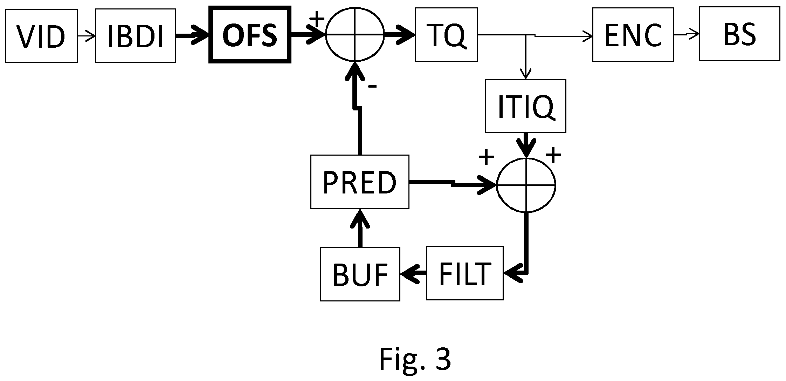

In a first exemplary embodiment exemplarily depicted in Fig. 3, it is proposed to modify at encoder side the "Bit-Depth-Increase" function with an IBDI post-processing (also called IBDI Filter or adaptive offsetting) in order to reduce the range of the non-zero differences, also called gaps, between adjacent samples in a frame of increased bit depth. This is done by applying the filter IBDI to the video signal of increased bit depth prior to determination of a residual between the video signal of increased bit depth and a prediction PRED thereof.

Advantageously but not necessarily, the adaptive IBDI Filter function has the property that most significant bits remain unchanged wherein the most significant bits of the sample are the bits prior to IBDI.

Many filter designs are possible. In an exemplary embodiment, the IBDI Filter is a non-linear low pass filter adding an offset which depends on values of adjacently neighboring samples. The offset value is in the range $[0; (2^{bitIncrement}-1)]$ wherein $bitIncrement$ is the difference between the original bit depth and the increased bit depth.

An example of such non-linear low pass filter adding an offset is the following offset function:

$$Offset(x_{cur}) = Min\{ (\alpha * 2^{bitIncrement}; (2^{bitIncrement} - 1) \}$$

wherein

$x_{cur}$ denotes the position of a given pixel in the frame,
$N(x_{cur})$ denotes the set of pixel positions in the neighborhood of $x_{cur}$ without $x_{cur}$,
$Nb(x_{cur})$ denotes the number of pixel in the neighborhood $N(x_{cur})$ ($Nb(x_{cur})$ -connexity), $Nb(x_{cur}) = \#(\{N(x_{cur})\})$
$C(x)$ denotes the original component sample value before "Bit-Depth-Increase" at the position x in the frame,
$Cpt(x_{cur})$ denotes the number of pixels in the neighborhood of $x_{cur}$ with component value greater than the component value of $x_{cur}$:

$$Cpt(x_{cur}) = \#( \{ x_n \in N(x_{cur}) | C(x_n) > C(x_{cur}) \} )$$

and

$$\alpha = Cpt(x_{cur}) / Nb(x_{cur}).$$

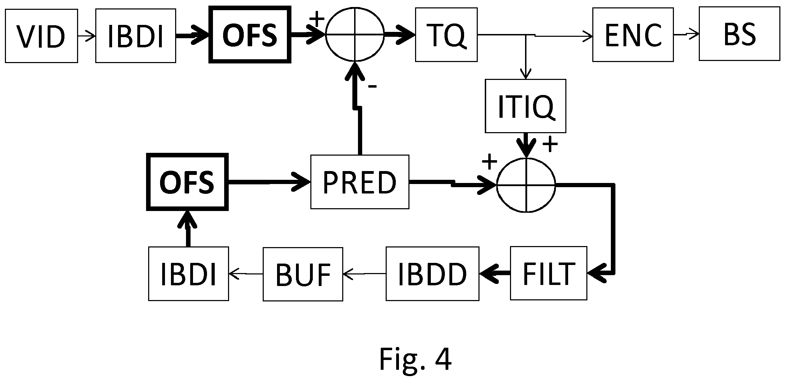

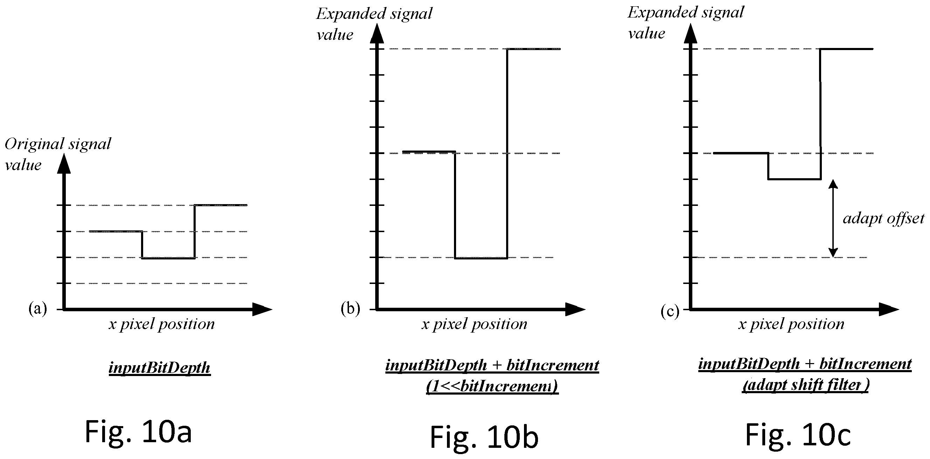

Advantageously but not necessarily, the IBDI filter process is also applied to pixel values of reference video frames used for inter prediction also known as temporal prediction. This is exemplarily depicted in fig. 4 and fig. 10. In a multi view coding context, the IBDI filter process can also be applied to pixel values of reference video frames of a different view wherein the reference video frames are used for inter-view prediction.

Inter prediction and inter-view prediction makes use of reconstructed reference frames stored in a reference frame buffer BUF.

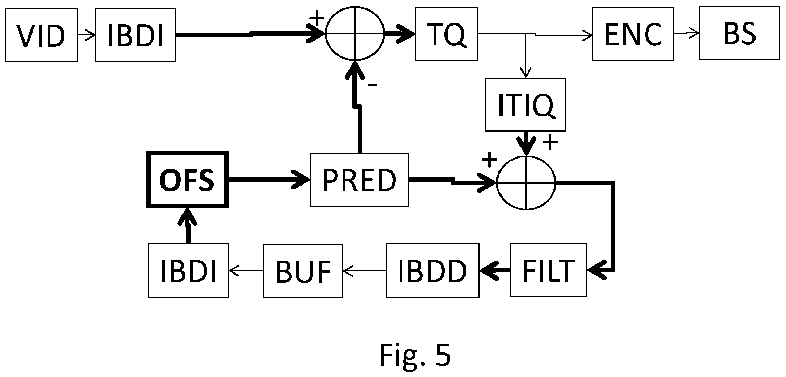

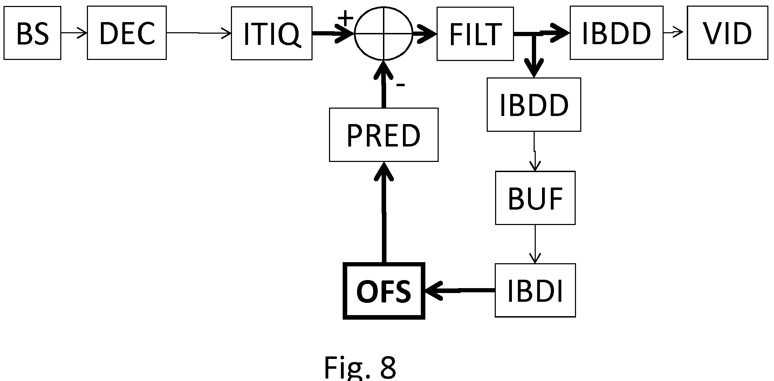

The reconstructed reference frames can be stored with original bit depth or with a bit depth larger than the original bit depth but smaller than the increased bit depth, in order to save storage capacity. In this case, reconstructed reference frames retrieved from the buffer can be bit depth increased IBDI and filtered FILT before using them for prediction PRED, at encoder side as exemplarily depicted in fig. 4 and fig. 5, and at decoder side, as exemplarily depicted in fig. 8.

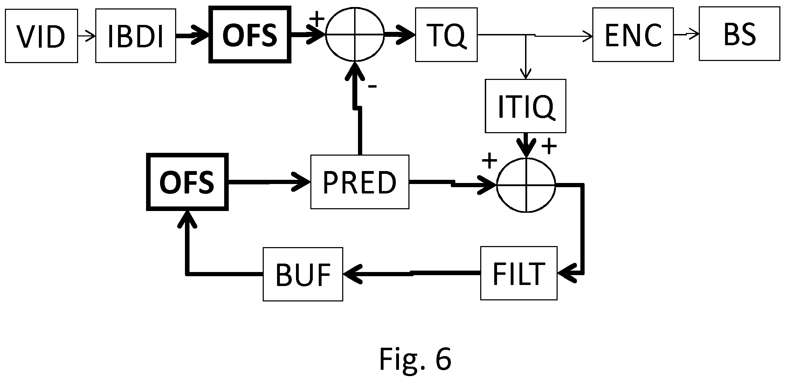

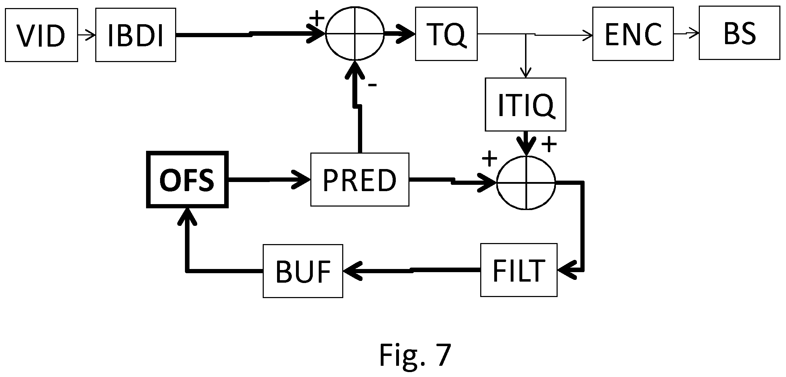

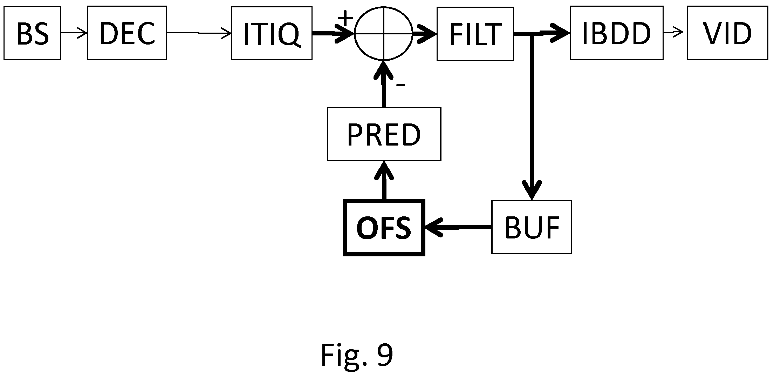

The reconstructed reference frames can be stored with increased bit depth wherein the offset is either maintained, or, for better compression, amended or removed. In this case of storage with increased bit depth, reconstructed reference frames retrieved from the buffer can be filtered before using them for prediction, at encoder side as exemplarily depicted in fig. 6 and fig. 7, and at decoder side, as exemplarily depicted in fig. 9.

Tests of this invention on various video encoders and decoders show that for a given quality level (PSNR) the bit stream size can be reduced significantly, in particular for devices using increased bit depth according to high efficient video codec (HEVC) and/or according to key technology areas (KTA) reference software codec.

The principle of adaptive filtering is exemplarily depicted in Fig. 10 wherein Fig. 10a depicts an exemplarily original signal value, Fig. 10b depicts the spreading of the exemplarily signal values due to increasing the bit depth and Fig. 10c exemplarily depicts reduction of said spreading due to the proposed adaptive offsetting.

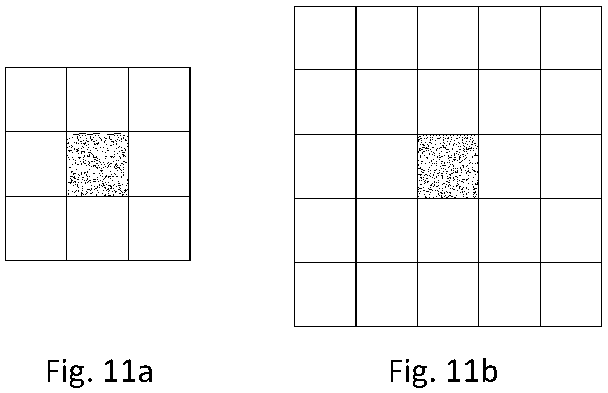

Fig. 11 gives to examples of neighbourhoods. Fig. 11a depicts a neighbourhood consisting of the eight pixels directly adjacent to the pixel to-be-filtered which is depicted in grey; Fig. 11b depicts a larger neighbourhood further comprising all pixels adjacent to the pixels of the neighbourhood depicted in fig. 11a, with exception of the pixel to-be-filtered.

## Claims

1. Method for modifying a video frame intended to be used in an encoding method, wherein the bit depth of video frames at the input of the encoding method has been increased, and wherein the video frame intended to be used in the encoding method is at least one of a video frame at the input of the encoding method or a reference frame in the encoding prediction loop, said method comprising the step of:

   - offsetting pixel values of the video frame intended to be used in the encoding method with offsets, said offsets depending on values of neighboring pixels in the spatial neighborhood, said spatial neighborhood consisting of pixels directly adjacent to the pixel to-be-offset;

   the method being **characterized in that** said offsets depend on the number of those of the neighboring pixels which have pixel values larger than the value of the pixel to-be-offset.

2. Method of claim 1 wherein said offsets are proportional to a ratio $\alpha$ of the number of those of the neighboring pixels which have pixel values larger than the value of the pixel to-be-offset over the total number of neighboring pixels in case $\alpha*2^{bitIncrement}$ is smaller than $2^{bitIncrement}-1$ where bitIncrement is the number of bits by which bit depth is increased.

3. Method of claim 1 or 2 wherein said offsets are not larger than a maximum offset, the maximum offset depending on a number of bits by which bit depth is increased.

4. Method of any of claims 1 to 3, wherein in case the reference frame in the encoding prediction loop is stored at a bit depth lower than the increased bit depth of the input video frame, the bit depth at which is stored the reference frame being larger than the original bit depth of the input video frame, the method further comprises increasing the bit depth of the values of the pixels of the reference frame in the encoding prediction loop to increased bit depth of the input video frame.

5. Method for encoding a video frame, said method comprising

   increasing the bit depth of the values of the pixels of the video frame at the input of the encoding method;

modifying the video frame with increased bit depth at the input of the encoding method according to the method of one of claims 1-3 prior to determining a residual between the modified video frame and a reference video frame.

6. Method of claim 5 further comprising modifying the reference video frame according to the method of one of claims 1-4 in the prediction loop.

7. Method for modifying a video frame intended to be used in a decoding method, wherein the bit depth of the values of the pixels of video frames to decode was increased at the input of the encoding method, wherein the video frame intended to be used in a decoding method is a reference frame in the decoding prediction loop; said method comprising the step of offsetting pixel values of the video frame intended to be used in the decoding method with offsets, said offsets depending on values of neighboring pixels in the spatial neighborhood, said spatial neighborhood consisting of pixels directly adjacent to the pixel to-be-offset;
the method being **characterized in that** said offsets depend on the number of those of the neighboring pixels which have pixel values larger than the value of the pixel to-be-offset.

8. Method for decoding a video frame wherein the bit depth of the values of the pixels of the video frame to decode was increased at the input of the encoding method, said method comprising modifying a reference video frame according to the method of claim 7, reconstructing the video frame using a decoded residual and the modified reference video frame and decreasing the bit depth values of the pixels of the reconstructed video frame.

9. Method of claim 8, wherein in case the reference frame in the decoding prediction loop is stored at a bit depth lower than the increased bit depth of the video frame to decode, the bit depth at which is stored the reference frame being larger than the original bit depth of the input of the encoding method, the method further comprises increasing the bit depth of the values of the pixels of the reference frame in the decoding prediction loop to increased bit depth of the video frame to decode.

10. Device for modifying a video frame intended to be used in an encoder wherein the bit depth of video frames at the input of the encoder has been increased, and wherein the video frame intended to be used in the encoder is at least one of a video frame at the input of the encoder or a reference frame in the prediction loop of the encoder, said device comprising processing means for

- offsetting pixel values of the video frame intended to be used in the encoder with offsets, said offsets depending on values of neighboring pixels in the spatial neighborhood, said spatial neighborhood consisting of pixels directly adjacent to the pixel to-be-offset;

the device being characterized said offsets depend on the number of those of the neighboring pixels which have pixel values larger than the value of the pixel to-be-offset.

11. Device for encoding a video frame, said device comprising
means for increasing the bit depth of the values of the pixels of the video frame at the input of the encoding method; and the device for modifying the video frame with increased bit depth at the input of the encoding device according to claim 10, said device further comprising means for residual encoding the modified video frame using a reference video frame.

12. Device for modifying a video frame intended to be used in a decoder, wherein the bit depth of the values of the pixels of video frames to decode was increased at the input of the encoder,
wherein the video frame intended to be used in a decoder is a reference frame in the decoding prediction loop; said device comprising processing means for offsetting pixel values of the video frame intended to be used in the decoder with offsets, said offsets depending on values of neighboring pixels in the spatial neighborhood, said spatial neighborhood consisting of pixels directly adjacent to the pixel to-be-offset;
the device being **characterized in that** said offsets depend on the number of those of the neighboring pixels which have pixel values larger than the value of the pixel to-be-offset.

13. Device for decoding a video frame wherein the bit depth of the values of the pixels of the video frame to decode was increased at the input of the encoder, said device comprising the device for modifying a video frame according to claim 12 , said modifying device being used for modifying a reference video frame, said decoding device further comprising means for reconstructing the video frame using a decoded residual and the modified reference video frame and means for and decreasing the bit depth values of the pixels of the reconstructed video frame.

**14.** Non-transitory storage medium carrying an encoded video frame, the video frame being encoded according to the method of claim 5.

**Patentansprüche**

**1.** Verfahren zum Ändern eines Videobilds, das in einem Codierungsverfahren verwendet werden soll, wobei die Bittiefe von Videobildern bei der Eingabe des Codierungsverfahrens erhöht worden ist, und wobei das Videobild, das in dem Codierungsverfahren verwendet werden soll, ein Videobild bei der Eingabe des Codierungsverfahrens und/oder ein Referenzbild in der Codierungsvorhersageschleife ist, wobei das Verfahren den folgenden Schritt umfasst:

- Versetzen von Pixelwerten des Videobilds, das in dem Codierungsverfahren verwendet werden soll, mit Versätzen, wobei die Versätze von Werten von Nachbarpixeln in der räumlichen Nachbarschaft abhängen, wobei die räumliche Nachbarschaft aus Pixeln besteht, die an das zu versetzende Pixel direkt angrenzen;

wobei das Verfahren **dadurch gekennzeichnet ist, dass** die Versätze von der Anzahl jener Nachbarpixel abhängen, die Pixelwerte aufweisen, die größer als der Wert des zu versetzenden Pixels sind.

**2.** Verfahren nach Anspruch 1, wobei die Versätze proportional zu einem Verhältnis □ der Anzahl jener Nachbarpixel, die Pixelwerte aufweisen, die größer als der Wert des zu versetzenden Pixels ist, zu der Gesamtzahl von Nachbarpixeln sind, falls $\square \cdot 2^{bitIncrement}$ kleiner als $2^{bitIncrement}-1$ ist, wobei bitIncrement die Anzahl der Bits ist, um die die Bittiefe erhöht wird.

**3.** Verfahren nach Anspruch 1 oder 2, wobei die Versätze nicht größer als ein maximaler Versatz sind, wobei der maximale Versatz von einer Anzahl der Bits, um die die Bittiefe erhöht wird, abhängt.

**4.** Verfahren nach einem der Ansprüche 1 bis 3, wobei, falls das Referenzbild in der Codierungsvorhersageschleife mit einer Bittiefe gespeichert ist, die kleiner als die erhöhte Bittiefe des Eingabevideobilds ist, die Bittiefe, mit der das Referenzbild gespeichert ist, größer als die ursprüngliche Bittiefe des Eingabevideobilds ist, das Verfahren ferner das Erhöhen der Bittiefe der Werte der Pixel des Referenzbilds in der Codierungsvorhersageschleife auf eine erhöhte Bittiefe des Eingabevideobilds umfasst.

**5.** Verfahren zum Codieren eines Videobilds, wobei das Verfahren umfasst:

Erhöhen der Bittiefe der Werte der Pixel des Videobilds bei der Eingabe des Codierungsverfahrens;
Ändern des Videobilds mit erhöhter Bittiefe bei der Eingabe des Codierungsverfahrens gemäß dem Verfahren nach einem der Ansprüche 1-3 vor dem Bestimmen eines Rests zwischen dem geänderten Videobild und einem Referenzvideobild.

**6.** Verfahren nach Anspruch 5, das ferner das Ändern des Referenzvideobilds gemäß dem Verfahren nach einem der Ansprüche 1-4 in der Vorhersageschleife umfasst.

**7.** Verfahren zum Ändern eines Videobilds, das in einem Decodierungsverfahren verwendet werden soll, wobei die Bittiefe der Werte der Pixel von zu decodierenden Videobildern bei der Eingabe des Codierungsverfahrens erhöht wurde, wobei das Videobild, das in einem Decodierungsverfahren verwendet werden soll, ein Referenzbild in der Decodierungsvorhersageschleife ist; wobei das Verfahren den Schritt des Versetzens von Pixelwerten des Videobilds, das in dem Decodierungsverfahren verwendet werden soll, mit Versätzen umfasst, wobei die Versätze von Werten von Nachbarpixeln in der räumlichen Nachbarschaft abhängen, wobei die räumliche Nachbarschaft aus Pixeln, die an das zu versetzende Pixel direkt angrenzen, besteht;
wobei das Verfahren **dadurch gekennzeichnet ist, dass** die Versätze von der Anzahl jener Nachbarpixel abhängen, die Pixelwerte aufweisen, die größer als der Wert des zu versetzenden Pixelwerts sind.

**8.** Verfahren zum Decodieren eines Videobilds, wobei die Bittiefe der Werte der Pixel des zu decodierenden Videobilds bei der Eingabe des Codierungsverfahrens erhöht wurde, wobei das Verfahren das Ändern eines Referenzvideobilds gemäß dem Verfahren nach Anspruch 7, das Wiederherstellen des Videobilds unter Verwendung eines decodierten Rests und des geänderten Referenzvideobilds und das Verringern der Bittiefenwerte der Pixel des wiederhergestellten Videobilds umfasst.

9. Verfahren nach Anspruch 8, wobei, falls das Referenzbild in der Decodierungsvorhersageschleife mit einer kleineren Bittiefe als der erhöhten Bittiefe des zu decodierenden Videobilds gespeichert ist, die Bittiefe, in der das Referenzbild gespeichert ist, größer als die ursprüngliche Bittiefe der Eingabe des Codierungsverfahrens ist, das Verfahren ferner das Erhöhen der Bittiefe der Werte der Pixel des Referenzbilds in der Decodierungsvorhersageschleife auf eine erhöhte Bittiefe des zu decodierenden Videobilds umfasst.

10. Vorrichtung zum Ändern eines Videobilds, das in einem Codierer verwendet werden soll, wobei die Bittiefe von Videobildern bei dem Eingang des Codierers erhöht worden ist, und wobei das Videobild, das in dem Codierer verwendet werden soll, ein Videobild bei dem Eingang des Codierers und/oder ein Referenzbild in der Vorhersageschleife des Codierers ist, wobei die Vorrichtung ein Verarbeitungsmittel umfasst zum:

   - Versetzen von Pixelwerten des Videobilds, das in dem Codierer verwendet werden soll, mit Versätzen, wobei die Versätze von Werten von Nachbarpixeln in der räumlichen Nachbarschaft abhängen, wobei die räumliche Nachbarschaft aus Pixeln besteht, die an das zu versetzende Pixel direkt angrenzen;

   wobei die Vorrichtung **dadurch gekennzeichnet ist, dass** die Versätze von der Anzahl jener Nachbarpixel abhängen, die Pixelwerte aufweisen, die größer als der Wert des zu versetzenden Pixels sind.

11. Vorrichtung zum Codieren eines Videobilds, wobei die Vorrichtung umfasst:

   ein Mittel zum Erhöhen der Bittiefe der Werte der Pixel des Videobilds bei der Eingabe des Codierungsverfahrens; und
   die Vorrichtung zum Ändern des Videobilds mit erhöhter Bittiefe bei dem Eingang der Codierungsvorrichtung nach Anspruch 10, wobei die Vorrichtung ferner ein Mittel für die Restcodierung des geänderten Videobilds unter Verwendung eines Referenzvideobilds umfasst.

12. Vorrichtung zum Ändern eines Videobilds, das in einem Decodierer verwendet werden soll, wobei die Bittiefe der Werte der Pixel von zu decodierenden Videobildern bei dem Eingang des Codierers erhöht wurde, wobei das Videobild, das in einem Decodierer verwendet werden soll, ein Referenzbild in der Decodierungsvorhersageschleife ist; wobei die Vorrichtung ein Verarbeitungsmittel zum Versetzen von Pixelwerten des Videobilds, das in dem Decodierer verwendet werden soll, mit Versätzen umfasst, wobei die Versätze von Werten von Nachbarpixeln in der räumlichen Nachbarschaft abhängen, wobei die räumliche Nachbarschaft aus Pixeln, die an das zu versetzende Pixel direkt angrenzen, besteht; wobei die Vorrichtung **dadurch gekennzeichnet ist, dass** die Versätze von der Anzahl jener Nachbarpixel abhängen, die Pixelwerte aufweisen, die größer als der Wert des zu versetzenden Pixels sind.

13. Vorrichtung zum Decodieren eines Videobilds, wobei die Bittiefe der Werte der Pixel des zu decodierenden Videobilds bei dem Eingang des Codierers erhöht wurde, wobei die Vorrichtung die Vorrichtung zum Ändern eines Videobilds nach Anspruch 12 umfasst, wobei die Änderungsvorrichtung zum Ändern eines Referenzvideobilds verwendet wird, wobei die Decodierungsvorrichtung ferner ein Mittel zum Wiederherstellen des Videobilds unter Verwendung eines decodierten Rests und des geänderten Referenzvideobilds und ein Mittel zum Verringern der Bittiefenwerte der Pixel des wiederhergestellten Videobilds umfasst.

14. Nichttransitorisches Speichermedium, das ein codiertes Videobild trägt, wobei das Videobild gemäß dem Verfahren nach Anspruch 5 codiert ist.

**Revendications**

1. Procédé pour modifier une trame vidéo destinée à être utilisée dans un procédé de codage, où la profondeur de bit de trames vidéo à l'entrée du procédé de codage a été augmentée, et où la trame vidéo destinée à être utilisée dans le procédé de codage est au moins une trame vidéo à l'entrée du procédé de codage ou une trame de référence dans la boucle de prédiction de codage, ledit procédé comprenant les étapes consistant à :

   - décaler des valeurs de pixel de la trame vidéo destinée à être utilisée dans le procédé de codage avec des décalages, lesdits décalages dépendant de valeurs de pixels voisins dans le voisinage spatial, ledit voisinage spatial étant constitué de pixels directement adjacents au pixel à décaler ;

le procédé étant **caractérisé en ce que** lesdits décalages dépendent du nombre de ces pixels voisins dont les valeurs de pixel sont supérieures à la valeur du pixel à décaler.

2. Procédé selon la revendication 1, dans lequel lesdits décalages sont proportionnels à un ratio a du nombre de ces pixels voisins dont les valeurs de pixel sont supérieures à la valeur du pixel à décaler sur le nombre total de pixels voisins dans le cas où $\alpha*2^{bitIncrement}$ est inférieur à $2^{bitIncrement}-1$, où bitIncrement est le nombre de bits par lequel la profondeur de bit est augmentée.

3. Procédé selon la revendication 1 ou 2 dans lequel lesdits décalages ne sont pas supérieurs à un décalage maximal, le décalage maximal dépendant d'un nombre de bits par lequel la profondeur de bit est augmentée.

4. Procédé selon l'une quelconque des revendications 1 à 3, dans lequel dans le cas où la trame de référence dans la boucle de prédiction de codage est stockée à une profondeur de bit inférieure à la profondeur de bit augmentée de la trame vidéo d'entrée, la profondeur de bit à laquelle la trame de référence est stockée étant supérieure à la profondeur de bit d'origine de la trame vidéo d'entrée, le procédé comprenant en outre l'augmentation de la profondeur de bit des valeurs des pixels de la trame de référence dans la boucle de prédiction de codage jusqu'à la profondeur de bit augmentée de la trame vidéo d'entrée.

5. Procédé de codage d'une trame vidéo, ledit procédé comprenant
l'augmentation de la profondeur de bit des valeurs des pixels de la trame vidéo à l'entrée du procédé de codage ; la modification de la trame vidéo avec la profondeur de bit augmentée à l'entrée du procédé de codage selon le procédé de l'une des revendications 1 à 3 avant la détermination d'un résidu entre la trame vidéo modifiée et une trame vidéo de référence.

6. Procédé selon la revendication 5 comprenant la modification de la trame vidéo de référence selon le procédé de l'une des revendications 1 à 4 dans la boucle de prédiction.

7. Procédé pour modifier une trame vidéo destinée à être utilisée dans un procédé de décodage, où la profondeur de bit des valeurs des pixels de trames vidéo à décoder à été augmentée à l'entrée du procédé de codage, où la trame vidéo destinée à être utilisée dans un procédé de décodage est une trame de référence dans la boucle de prédiction de décodage, ledit procédé comprenant l'étape de décalage de valeurs de pixel de la trame vidéo destinée à être utilisée dans le procédé de décodage avec des décalages, lesdits décalages dépendant de valeurs de pixels voisins dans le voisinage spatial, ledit voisinage spatial étant constitué de pixels directement adjacents au pixel à décaler ; le procédé étant **caractérisé en ce que** lesdits décalages dépendent du nombre de ces pixels voisins dont les valeurs de pixel sont supérieures à la valeur du pixel à décaler.

8. Procédé pour décoder une trame vidéo où la profondeur de bit des valeurs des pixels de la trame vidéo à décoder a été augmentée à l'entrée du procédé de codage, ledit procédé comprenant la modification d'une trame vidéo de référence selon le procédé de la revendication 7, la reconstruction de la trame vidéo à l'aide d'un résidu décodé et de la trame vidéo de référence modifiée et la diminution des valeurs de profondeur de bit des pixels de la trame vidéo reconstruite.

9. Procédé selon la revendication 8, dans lequel dans le cas où la trame de référence dans la boucle de prédiction de décodage est stockée à une profondeur de bit inférieure à la profondeur de bit augmentée de la trame vidéo à décoder, la profondeur de bit à laquelle la trame de référence est stockée étant supérieure à la profondeur de bit d'origine de l'entrée du procédé de décodage, le procédé comprenant en outre l'augmentation de la profondeur de bit des valeurs des pixels de la trame de référence dans la boucle de prédiction de décodage jusqu'à la profondeur de bit augmentée de la trame vidéo à décoder.

10. Procédé pour modifier une trame vidéo destinée à être utilisée dans un codeur, où la profondeur de bit de trames vidéo à l'entrée du codeur a été augmentée, et où la trame vidéo destinée à être utilisée dans le codeur est au moins une trame vidéo à l'entrée du codeur ou une trame de référence dans la boucle de prédiction du codeur, ledit dispositif comprenant un moyen de traitement pour

- décaler les valeurs de pixel de la trame vidéo destinée à être utilisée dans le codeur avec des décalages, lesdits décalages dépendant des valeurs de pixels voisins dans le voisinage spatial, ledit voisinage spatial étant constitué de pixels directement adjacents au pixel à décaler ;

le dispositif étant **caractérisé en ce que** lesdits décalages dépendent du nombre de ces pixels voisins dont les valeurs de pixel sont supérieures à la valeur du pixel à décaler.

11. Dispositif de codage d'une trame vidéo, ledit dispositif comprenant un moyen d'augmenter la profondeur de bit des valeurs des pixels de la trame vidéo à l'entrée du procédé de codage ; et
le dispositif pour modifier la trame vidéo avec une profondeur de bit augmentée à l'entrée du dispositif de codage selon la revendication 10, ledit dispositif comprenant en outre un moyen pour le codage résiduel de la trame vidéo modifiée à l'aide d'une trame vidéo de référence.

12. Dispositif pour modifier une trame vidéo destinée à être utilisée dans un décodeur, où la profondeur de bit des valeurs des pixels des trames vidéo à décoder à été augmentée à l'entrée du codeur,
où la trame vidéo destinée à être utilisée dans un décodeur est une trame de référence dans la boucle de prédiction de décodage ; ledit dispositif comprenant un moyen de traitement pour décaler les valeurs de pixel de la trame vidéo destinée à être utilisée dans le décodeur avec des décalages, lesdits décalages dépendant des valeurs de pixels voisins dans le voisinage spatial, ledit voisinage spatial étant constitué de pixels directement adjacents au pixel à décaler ;
le dispositif étant **caractérisé en ce que** lesdits décalages dépendent du nombre de ces pixels voisins dont les valeurs de pixel sont supérieures à la valeur du pixel à décaler.

13. Dispositif pour décoder une trame vidéo où la profondeur de bit des valeurs des pixels de la trame vidéo à décoder a été augmentée à l'entrée du codeur, ledit dispositif comprenant le dispositif pour modifier une trame vidéo selon la revendication 12, ledit dispositif de modification étant utilisé pour modifier une trame vidéo de référence, ledit dispositif de décodage comprenant en outre un moyen pour reconstruire la trame vidéo à l'aide d'un résidu décodé et de la trame vidéo de référence modifiée et un moyen pour diminuer les valeurs de profondeur de bit des pixels de la trame vidéo reconstruite.

14. Support de stockage non transitoire comprenant une trame vidéo codée, la trame vidéo étant codée selon le procédé de la revendication 5.

Fig. 1 – prior art

Fig. 2 – prior art

Fig. 3

Fig. 4

EP 2 584 780 B1

Fig. 5

Fig. 6

Fig. 7

Fig. 8

BS → DEC → ITIQ → (+) ⊕ → FILT → IBDD → VID

PRED

OFS ← BUF

Fig. 9

Original signal
value

(a)

x pixel position

inputBitDepth

Fig. 10a

Expanded signal
value

(b)

x pixel position

inputBitDepth + bitIncrement
(1<<bitIncrement)

Fig. 10b

Expanded signal
value

adapt offset

(c)

x pixel position

inputBitDepth + bitIncrement
(adapt shift filter )

Fig. 10c

Fig. 11b

Fig. 11a

**EP 2 584 780 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOANG.** Unified scaling with adaptive offset for reference frame compression with 1801. *MPEG MEETING,* 21 January 2011, vol. 95